# EUROPEAN PATENT SPECIFICATION

(11) **EP 1 224 653 B1**
(45) Date of publication and mention of the grant of the patent: **09.01.2008**
(21) Application number: 00991997.8
(22) Date of filing: 11.10.2000
(51) Int. Cl.: G09F 19/00

(54) **FRICTIONLESS SELF-POWERED MOVING DISPLAY**
REIBUNGSFREIE SELBSTANGETRIEBENE ANZEIGEVORRICHTUNG
DISPOSITIF DE VISUALISATION AUTO-ENTRAINE, SANS FRICTION

(30) Priority: 18.10.1999 US 160142 P
(43) Date of publication of application: 24.07.2002
(73) Proprietor: French, William W., Cardiff, CA 92007 (US)
(72) Inventor: French, William W., Cardiff, CA 92007 (US)
(74) Representative: Viering, Jentschura & Partner
(86) International application number: PCT/US2000/028038
(87) International publication number: WO 2001/033534

(56) References cited:
- DE-A- 4 137 175
- PATENT ABSTRACTS OF JAPAN vol. 014, no. 516 (P-1130), 13 November 1990 (1990-11-13) & JP 02 214886 A (EIJI HONDA), 27 August 1990 (1990-08-27)
- PATENT ABSTRACTS OF JAPAN vol. 005, no. 064 (P-059), 30 April 1981 (1981-04-30) & JP 56 016111 A (HITACHI LTD), 16 February 1981 (1981-02-16)
- PATENT ABSTRACTS OF JAPAN vol. 1998, no. 11, 30 September 1998 (1998-09-30) & JP 10 171383 A (HIROSE MAMORU), 26 June 1998 (1998-06-26) cited in the application
- PATENT ABSTRACTS OF JAPAN vol. 1996, no. 01, 31 January 1996 (1996-01-31) & JP 07 239652 A (MITSUBISHI PENCIL CO LTD), 12 September 1995 (1995-09-12) cited in the application
- PATENT ABSTRACTS OF JAPAN vol. 1995, no. 11, 26 December 1995 (1995-12-26) & JP 07 219426 A (MITSUBISHI PENCIL CO LTD), 18 August 1995 (1995-08-18)

## Description

### Field of the Invention

The instant invention relates to moving display devices, and more particularly to structures that are supported by, or otherwise in contact with, other objects, but appear to move on their own in spite of commonly held expectations about frictional drag between objects in contact.

### Background of the Invention

Various types of novelty structures which move with either no apparent support, drive mechanism, or power input are often used as toys, decorative conversation pieces or advertising media. Various embodiments of such structures have been disclosed in US Patents Nos. 3,593,444 Akrongold, 4,196,899 Patterson, 5,435,086 Huang, 5,435,086 Huang et al., 5,442,868 McDarren et al, 5,893,789 Li-Hsiung, Japanese Patents Nos. 10137451, 101431101, and 10171383, all by Hirose Mamoru, Japanese Patents Nos. 7210081, 7219426, and 7239652 all to Takagi Hiroshi and German Patents Nos. DE19706736 Fushoellier, DE3725723 Steinbrinck, and DE 41377175 Lang. The prior art embodiments generally include structural elements and operational modes that make it clear to a casual observer that the moving bodies of prior art displays simply move relative to a container substantially surrounding the body, or move relative to an object in contact with the body by means of a bearing.

The countertorque-producing mechanisms and their supports are very evident to an observer, and do not create any interest or appreciation of ambient energy fields.

The present invention results from an attempt to devise an intriguing and educational structure that includes elements that appear to be moving on their own, while in contact with other relatively stationary objects, in spite of common sense ideas about friction.

### Summary of the Invention

The principal and secondary objects of this invention are to provide the simplest and least power-demanding apparently moving structure that can operate for extremely long periods of time without any apparent driving mechanism, input of power, or support bearing, and that may be suitable for use as a toy, advertising medium, novelty, or robotic component of a remote space or underwater installation.

In the preferred embodiment of the invention, these and other valuable objects are achieved by floating a sealed and hollow enclosure made of a transparent or translucent material within a volume of fluid held within a transparent sealed container of the same shape as the enclosure and mounted concentrically around it. The outer container is suspended or otherwise supported by a tripod or other like structure. The internal enclosure carries, over its surface, a graphic design such as a map of the world, and is made to spin upon itself independently from the outer container. Due to the transparency of the container and fluid, these components are not seen by the naked eye focused on the design covering the surface of the inner enclosure. Accordingly, the design appears to be spinning without any bearing contact with the external support structure. The internal drive mechanism is anchored, in other words, derives its spinning countertorque from a weight which orients itself in response to gravity. The drive mechanism can be a conventional motor with its own armature, field magnet and commutator, or can be constituted by a circular array of electromagnets acting as a rotor as they are selectively enabled by an electronic or mechanical commutator in co-reaction with, or biased by, either the earth's magnetic field, another man-made magnetic field, or the direction of ambient electromagnetic radiation or gravity.

Various commutating mechanisms for selectively and sequentially enabling the electromagnets are disclosed including a mechanical brush and commutator assembly, an optical shutter that masks specific photo cells dedicated to particular electromagnets, an assembly that senses the direction of light to commutate appropriately, and an electronic impulse distributor.

The drive mechanism is, in a general sense, a mechanism that creates relative force urging the motion of a body, such as the enclosure, relative to an element external to the body. Power for the drive mechanism can be provided by means external to the structure such as light incident on photovoltaic cells integral to the body, or by sources internal to the structure, such as batteries.

The preferred embodiment of the invention will be perceived as a replica of the planet earth floating in space and spinning forever in a stately way, autonomous, and guided by the interplay of solar energy, gravity and geomagnetic forces; a true icon for of a sustainable energy future for the earth.

The moving body can be an enclosure, preferably supported by buoyant forces, but may also be supported by any type of bearing, preferably disposed so that the bearing structure is not obvious to a casual observer. The buoyant forces may be provided by a liquid or a gas, including air.

In embodiments of the drive mechanism where a man-made external energy field whether photic or magnetic is used, rotation of the field may provide the spinning force applied to the enclosure.

The drive mechanism is preferably self-contained, that is, housed within the container, if not the enclosure.

### Brief Description of the Drawing

**Figure 1** is a front elevational view of the preferred embodiment of the invention;
**Figure 2** is a cross-sectional view of the enclosure exposing the internal drive mechanism;
**Figure 3** is a perspective view of a first alternate embodiment of the drive mechanism;
**Figure 4** is a cross-sectional view of a second alternate embodiment of the drive mechanism;
**Figure 5** is a top plan view thereof;
**Figure 6** is a diagram of the electromagnet feeding current circuit;
**Figure 7** is a cross-sectional diagram of a third alternate embodiment of the invention.
**Figure 8** is a cross-sectional diagram of a fourth alternate embodiment of the invention.
**Figure 9** is a cross-sectional diagram of a fifth alternate embodiment of the drive mechanism;
**Figure 10** is a top plan view thereof;
**Figures 11 and 13** are partial, cross-sectional diagrammatic views of alternate locations of the drive mechanism;
**Figure 14** is a top, diagrammatic view of a single electromagnet version of the drive mechanism;
**Figure 15** is an electrical diagram of the directional bearing locator therefor;
**Figure 16** is a cross-sectional diagrammatic view of a cylindrical embodiment of the invention.
**Figure 17** is a cross-sectional diagrammatic view of a bowl shaped embodiment of the invention.
**Figure 18** is a cross-sectional diagrammatic view of a sixth embodiment of the invention.
**Figure 19** is a cross-sectional diagrammatic view of a sub-assembly of Fig. 18; and
**Figure 20** is a cross-sectional diagrammatic view of a spherical body within a spherical container, showing the paths of light rays.

### Description of the Preferred Embodiment of the Invention

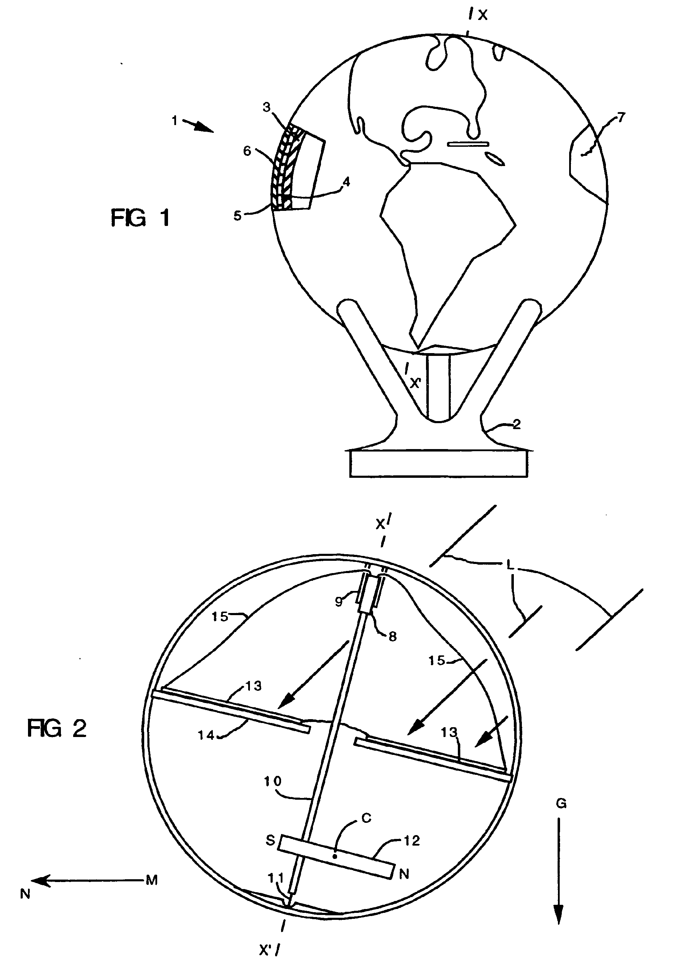

Referring now to the drawing, there is shown in Figures 1 and 2 the first embodiment of the invention in the form of a globe **1** which rests on a three-pronged support **2.** The globe comprises a spherical, closed and sealed enclosure **3** made of two hemispheric shells of acrylic glued together along an equatorial seam **4.** The enclosure **3** is concentrically surrounded by a spherical container **5** preferably made of transparent acrylic in the same manner as the enclosure 3. The enclosure **3** and the container **5** are separated by a small space filled with a liquid **6** so that the enclosure **3** is supported and surrounded by the liquid **6,** and can spin upon itself about an axis **X-X'** independently of the container **5.** Painted or etched upon the outer surface of the enclosure **3** is a graphic design, in this case, a map of the world **7.** The weight of the enclosure is appropriately distributed to place the structure in the desired orientation.

The enclosure **3** is preferably translucent. In other words, it is permeable to light waves but can conceal the drive mechanism inside it so that it becomes invisible to a casual observer. The liquid **6** is also transparent and preferably comprises two immiscible fluids such a fluoro-carbon PFPE 5060 available from the 3-M Company of Minneapolis, Minnesota and a hydrocarbon fluid, NORPAR 12, available from the EXXON Company of Houston, Texas in a density ratio of 1.68 to 0.75 respectively. The higher density fluoro-carbon fluid will normally occupy the lowermost part of the space between the enclosure and the container, and stabilize the floating structure. Any optical distortion caused by the different indexes of refraction of the fluids is least likely to be noticed in that region of the display. The fluids have been selected by reason of their immiscisbility, their low wetability, noncorrosivity, relative densities and coefficient of thermal expansion in relation to that of the acrylic material used in the fabrication of the two spheres. With this combination of liquids and the concentric arrangement of the sphere, any material expansion or constriction due to changes in temperature does not cause any risk of deformation or breakage.

Visual features **7** on the inner or outer surface of the enclosure **3** will appear to be on the outer surface of the container **5** with the proper choices of indexes of refraction and dimensions, according to well-known principles of optical refraction. This illusion works best if the container is free of visible features, but it can have a uniform tint that does not give a viewer a clue that it is not rotating. Alternatively, visual features can be printed on the container, or objects can be floated within the fluid to create other amusing optical effects.

As shown in Figure 2, the internal drive mechanism comprises an electrical motor **8** whose stator and housing are fixedly held by a tubular casing **9** also fixedly secured to the inside wall of the enclosure **3.** A shaft **10** projecting from the rotor of the motor is supported at its distal end by a pin bearing **11** on the antipodal part of the enclosure inside wall surface. A body mass or weight **12** is fixedly attached to the shaft with its center of gravity **C** held distally from it. The weight responding to the gravity **G** of the earth causes the shaft or axle **10** and the axis of rotation **X-X'** to tilt slightly in order to place the weight in its lowermost possible elevation. The weight **12** acting as a gravity sensor, tends to oppose the rotation of the shaft. Indeed, any rotation of the shaft about axis **X-X'** would result in an elevation of the center of gravity **C** against the pull of the earth's gravity. Accordingly, while the axle **10** is in the illustrated position, the powering of the motor **8** will cause the rotation of the stator and the entire enclosure and drive mechanism save for the axle immobilized by the weight **12** acting as a directional bearing locator, anchor and countertorque element. The weight can advantageously be magnetized so that it will align itself with the earth magnetic field and further stabilize the structure. In which case, the center of gravity **G** needs not be offset.

A multi-element photovoltaic collector **13** is mounted on the upper surface of an equatorial septum **14** fixedly connected to the enclosure **3.** Light rays or waves **L** passing through the transparent container and liquid, and the translucent wall of the enclosure **3** impinge upon the collector **13.** The resulting electrical current is fed to the motor **8** through a pair of conductors **15.** Accordingly, to the naked eye, the structure appears like a sphere spinning upon itself without any apparent supply of power, drive mechanism, or support bearings. It should be noted that the structure can be activated by solar light or any kind of man-made illumination.

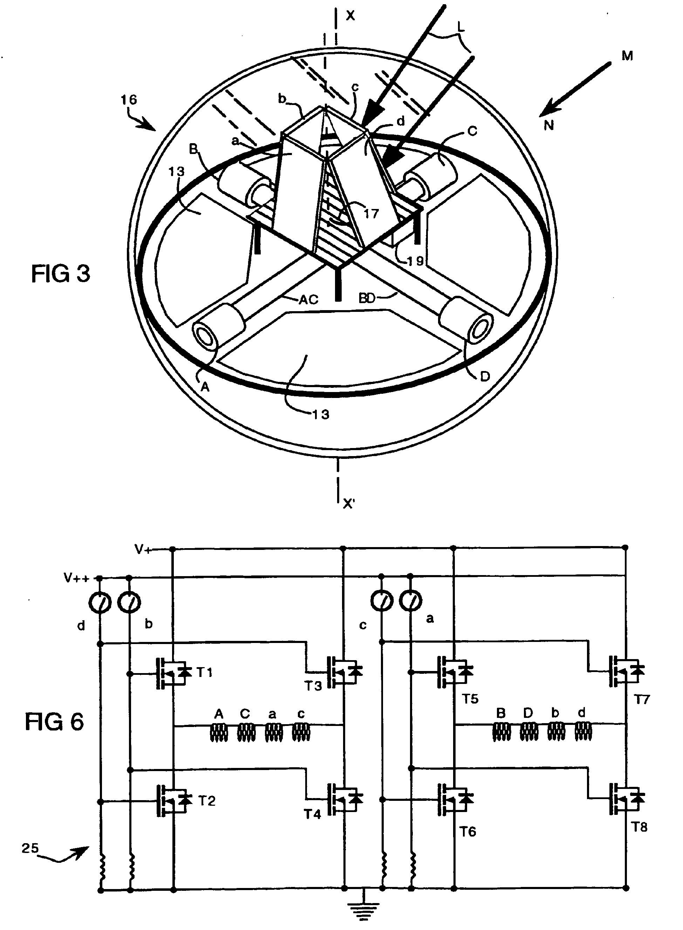

The first alternate embodiment **16** of the drive mechanism illustrated in Figure 3, relies on a known relationship between the orientation of an ambient magnetic field and the direction of another ambient field of energy such as another magnetic field, a field of radio waves or, as more specifically taught in this embodiment, a field of light waves impinging upon the enclosure. The enclosure spinning torque is derived from the earth magnetic field **M** and the directional bearing locator function is achieved by sensing the direction of the light waves **L.** The electrical motor is constituted by two electromagnets **AC and BD** positioned on the equatorial septum **14** in a cross-array wherein each electromagnet is oriented radially from the axis of rotation **X-X'.** Four photosensors **a, b, c, and d** are mounted in a pyramidal configuration wherein the photo-sensitive surface of each sensor lies in a different plane than the plane in which the photo-sensitive surface of any one of the other sensors lies. The angle **17** of the planes in relation to the spinning axis, can vary from zero degrees to approximately 75 degrees. Each plane is generally oriented in the same radial direction as one of the electromagnets. A series of photovoltaic collectors **13** are positioned on the septum **14** so that their photosensitive surfaces are substantially perpendicular to the axis of rotation **X-X'.** These collectors are wired together to repeatedly and sequentially enable the motor by providing a feeding and polarizing current to the electromagnets as determined by a logic unit **19** mounted under the photosensors **a, b, c, and d.**

Each of the electromagnets is preferably constituted by low coercivity iron core rod and a wire bobbin **A and C** or **B and D** at either end.

Assuming that each control photosensor is generally pointing to the same radial direction as an electromagnet bobbin of same reference, the logic unit **19** performs the following function:
If Cₐ is the greatest, then enable **BD.**
If C_{b} is greatest, then enable **AC.**
If C_{c} is greatest, then enable **DB.**
If C_{d} is greatest, then enable **CA.**
Wherein Cₐ, C_{b}, C_{c} and C_{d} represents the current flowing out of the **a, b, c, and d** control photosensors respectively, and **BD** indicates that the **BD** electromagnet is so polarized as to have its North Pole on the **B** bobbin side, **DB** indicates that the **BD** electromagnet has its North Pole on the **D** bobbin side, and **AC and CA** similarly indicate the polarization of the **AC** electromagnet. This logic can be readily implemented with a gating array or by means of a microprocessor. The phase relationship between the electromagnets and the photosensors can be modified and adjusted for optimal performance.

Instead of comparing the current outputs of the respective photosensors, the logic unit **19** may be designed to respond only to a current output exceeding a preset threshold level indicative of a substantial orthogonal orientation of the sensor in relation to the direction of the magnetic field.

In a variation of the above-described drive mechanism, the control photosensors **a, b, c, and d** are selected to be of photovoltaic type, large and powerful enough to provide the feeding current to the electromagnets in the absence of the horizontally mounted photovoltaic collectors **13.** It should be noted that all of the bobbins will be energized all the time to some degree and that bobbins on opposite ends of a given magnet will tend to magnetize the rod in opposite directions. The net magnetization of a given rod will depend on which bobbin is receiving the greatest current, which depends on which of the two driving photocollectors is receiving the most light. The angular relationship between the photocollector array and the electromagnets can be set to respond to a given magnetic field direction and ambient light direction, to drive rotation essentially the same as was described in Figure 3.

The electromechanical device can consist of a single electromagnet and a single photosensor. In such a case, the spinning movement of the enclosure may have to be manually initiated.

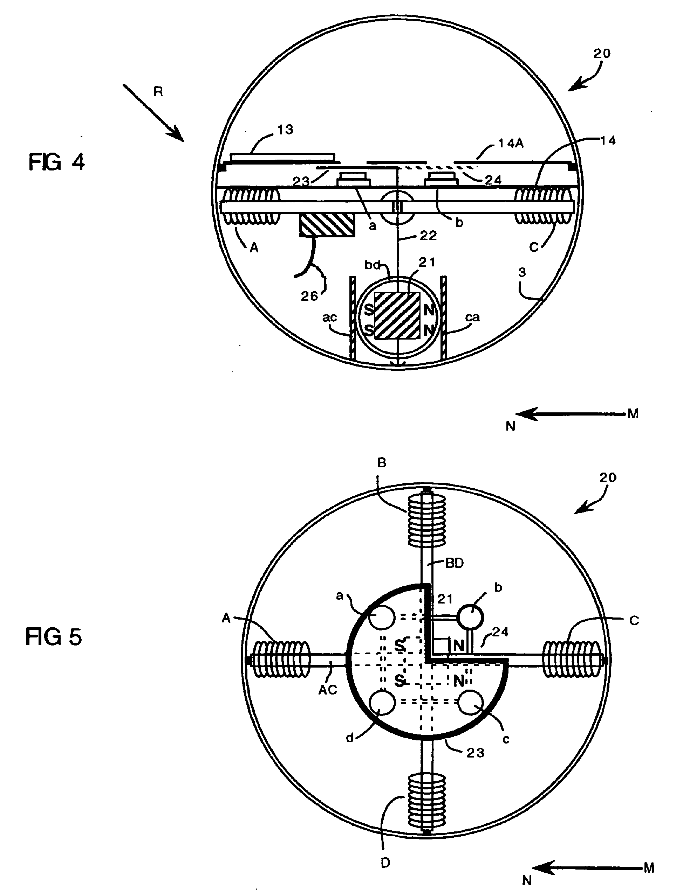

In the second alternate embodiment **20 of** the drive mechanism illustrated in Figures 4-6, the directional bearing locator is constituted by a magnet **21** that acts like a compass and orients itself with the earth magnetic field **M** to position and immobilizes the freely rotating axle **22** not unlike the axle **10** in the first embodiment of the driving mechanism. The axle passes through the center of the equatorial septum **14,** and mounts at its top a circular shutter **23** having a radial sector **24** of approximately 90 degrees cut out of it. Mounted on the top surface of the septum **14,** and under the shutter **23,** is a cross-array of photosensors or photovoltaic sensor-collectors **a, b, c and d.** A second septum **14A** parallel to the first is positioned above the shutter, has an aperture above each photosensor, and acts as a diaphragm. As the whole enclosure **3** and septi **14, 14A** rotate about the central vertical axis **X-X',** the photosensors are sequentially and periodically exposed, one at a time, to light waves **L** passing through the transparent or translucent wall of the enclosure. The larger photovoltaic collector **13** mounted on the top surface of the upper septum **14A,** has a photo sensitive top surface also exposed to the light waves. The cross-array of electromagnets **AC and BD** of the previously described embodiments extends to the periphery of the septum **14** which each electromagnet bobbin set at a predetermined angle from one of the photosensors **a, b, c or d.** When energized, each of the electromagnets tends to orient itself with the earth magnetic field just like the magnet **21** and shutter **23.**

The ambient magnetic field along which the electromagnets seek to align themselves, may be the geomagnetic field or the field created by the locator magnet **21** if the latter is powerful enough to supplant the earth magnetic field.

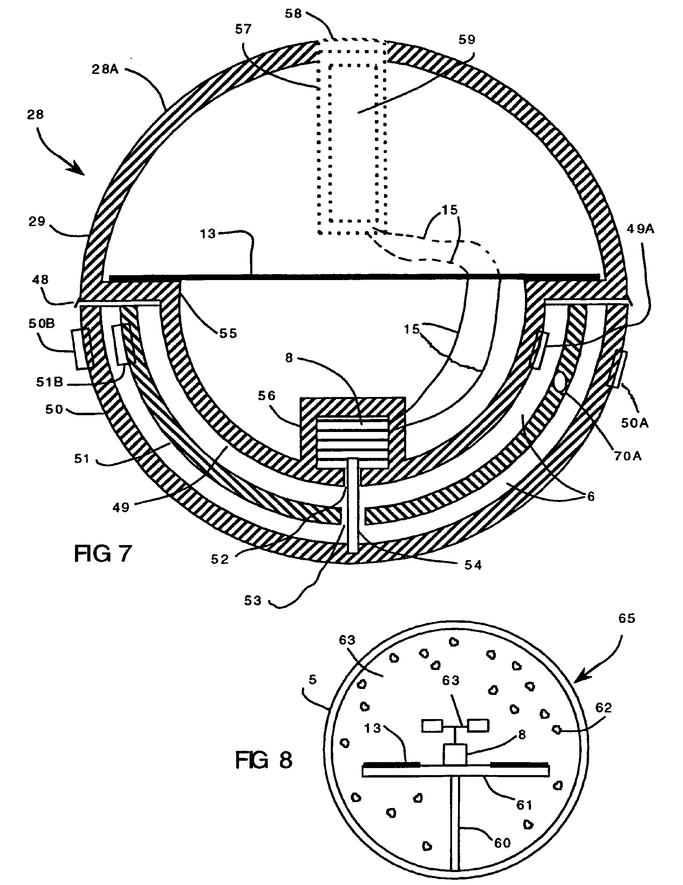

As illustrated in Figure 6, the control current flowing out of the photosensors **a,b,c, and d** exposed to the light waves is used to open an electronic matrix **25** of MOSFET switches **T1-T8** which distributes the feeding current out of the large photovoltaic sensor **13** to the appropriate electromagnet with the required polarization. When an electromagnet is energized, it seeks to align itself with the ambient magnetic field and cause the entire enclosure to spin counter-clockwise when looked at from the top.

Reed switches, optical and solid state sensors such as Hall-effect sensors can be used to accomplish the commutating functions.

Reflectively mounted mirrors can be disposed on the shutter to increase the amount of light impinging upon the exposed sensor.

In lieu of, or in addition to, the large photovoltaic sensor **13,** a radio frequency antenna **26** coupled to a receiver and rectifier unit **27** mounted against the under-surface of the septum **14** can be used to generate a feeding electrical current to the electromagnets. The radio frequency waves **R** can be generated by a remote transmitter not shown on the drawing.

It should be understood that when photovoltaic sensor-collectors are used to generate the energizing current fed to the electromagnets, there is no need for the electronic switching matrix **25.**

In the third alternate embodiment **28** of the structure illustrated in Figure 7, an enclosure 28A comprising an upper hemispherical part **29,** preferably displaying a pattern of visible features, and a lower hemispherical part **49** of a slightly smaller radius than the upper hemispherical part **29,** preferably displaying a related pattern of visible features aligned with the pattern on the upper part **29,** and an annular ring **55.** A motor **8** is mounted in a holder **56** in the lower hemispherical part 49, and the motor is connected by a shaft **54,** preferably transparent, to a hemispherical container **50.** The motor is energized by current from a photovoltaic collector **13** by means of wires **15.** Electric current may also be provided by means of wires **15** from a battery **59**, mounted in a cavity **57** within the upper hemispherical part **29,** where the cavity is sealed by means of a cap **58.** An intermediate hemisphere **51,** preferably transparent and decorated with visual features appropriate to the visual features of lower hemispherical part **49,** can be interposed between the lower hemisphere **49** and the container **50.** Layers of fluid **6** occupy the narrow space between the intermediate hemisphere **51** and the container **50** on one side and the lower hemispherical part **49** on the other side. The motor shaft passes through a hole **53** in the intermediate hemisphere **51.** Intermediate hemisphere **51** preferably has essentially the same density as the fluid **6.**Flaps **48** extending around the circumference of the upper hemisphere **29** preferably hide the gap between the lower part of the upper hemisphere **29** and the top edge of the container **50** from a casual observer.

Current supplied to the motor **8** will cause the enclosure **28A** to rotate about a vertical axis. The materials and dimensions of the container **50,** fluid **6,** intermediate shell **51,** and lower hemispherical part **49** of the body, are predetermined to cause visible features of the lower hemispherical- part **49** and intermediate shell **51** to be displayed on the outer surface of the container **50.** Thus, a casual observer will see what appears to be a simple, continuous object rotating, with an essentially continuous pattern of visible features preferably over its whole surface. The ball will appear to rotate despite frictional forces the observer would expect to exist between the apparently rotating object and any mechanical contact between the outside of the container **50** and any external objects, such as support elements.

The intermediate hemisphere **51** is preferably not connected to any other elements. Thus, it will be driven to rotate by shear forces between its inside surface and the rotating surface of the lower hemispherical part **49.** On the other hand, the rotation of the intermediate hemisphere **51** will be retarded by shear forces between its outer surface and the inner surface of the container **50.** The net effect will be that the intermediate hemisphere **51** rotates at a different rate, slower than the rate of the enclosure **28A.**

The intermediate hemisphere preferably has a visual feature **70A** that is displayed on the outer surface of container **50**. This can create a very intriguing visual effect in cooperation with a second visual feature on a relatively moving element such as the lower hemisphere **49** or container **50.** For example, the lower hemisphere **49** could have the visual features of the earth, and the visual feature **70A** could be translucent cloud patterns. Cloud patterns could also be added to the container **50,** in which case the cloud patterns could be seen as not moving in spite of the relatively moving visual feature **70A** displayed on the surface of container **50,** and thereby suggesting the surface is moving. Moving Moiré' patterns could be displayed by relatively moving objects such as container **50,** intermediate hemisphere **51,** and lower hemisphere **49** having cooperating patterns of visual features. For example, container **50** could have a visual feature **50A,** and the lower hemisphere **49** could have a visual feature **49A,** designed to cooperate to produce a kinetic Moiré display on the surface of container **50.** Kinetic linticular optic images can be displayed on the surface of container **50,** by means of a visual feature **50B,** in this case a linticular lens pattern, preferably forming at least part of the outer surface of container **50,** designed according to well known linticular optic principles, to cooperate with a preferably closely proximate moving internal body, such as intermediate hemisphere **51,** having a visual feature **51B.**

It is understood that the motor **8** could be virtually any kind of motor. For example, it could be a spring powered motor, wound up by means of a hole in the upper hemisphere **29** in a similar position to the battery holder **64.** The position of the motor **8** and its shaft **54** could be inverted from that shown, and photovoltaic cells mounted on the container could provide the driving current. The motor could also be mounted on the intermediate hemisphere **51** driving relative rotation of either the container **50,** or the lower hemisphere **49.**

In the fourth alternate embodiment **65** of the structure illustrated in Figure **8,** a container **5** contains a Rheoscopic fluid **63,** which is preferably translucent to allow light to reach photovoltaic cells **13,** while preferably blocking a clear view of the other elements within the container. A shaft **60** is fixedly attached to the inside surface of container **5** for supporting a disk **61** for mounting the cells **13** and an electric motor **8.** The motor drives a fan structure **63** for agitating the fluid. The fluid **63** contains bodies **62,** such as small metal particles, suspended in it, and the visible features of at least some of these particles are displayed on the outer surface of container 5 due to the predetermined thickness and refractive index of container **5** and the refractive index of the fluid **63.**

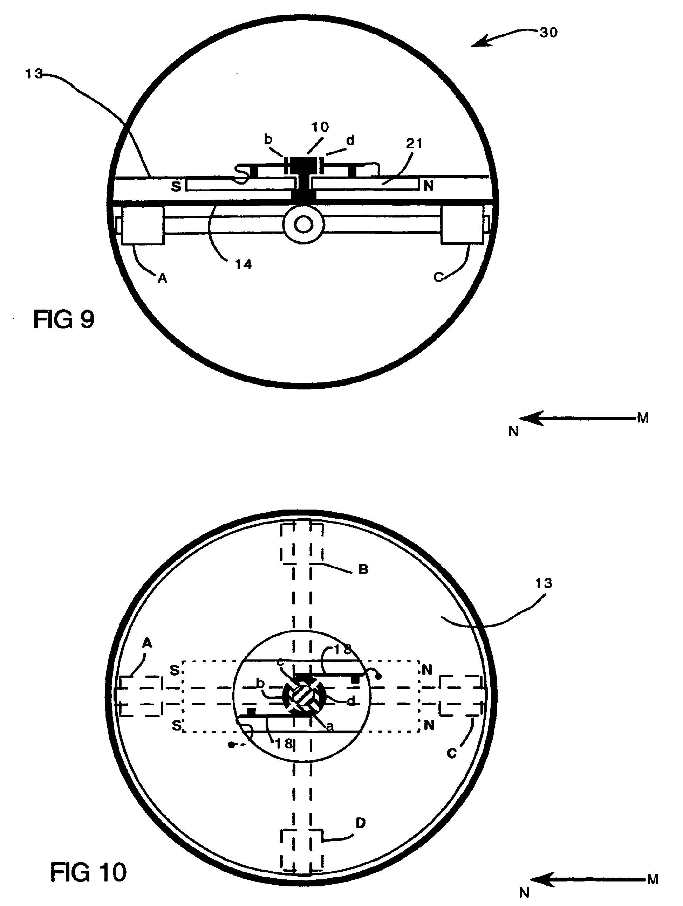

In a fifth alternate embodiment **30** of the drive mechanism illustrated in Figures 9 and 10, the magnet **21** acts as the directional bearing locator and the photovoltaic collector **13,** and is rotatively mounted on a central axle **10.** The axle, as well as the equatorial septum **14,** are fixedly attached to the enclosure **3.** A set of four ring segments **a, b, c and d are** mounted proximate the top surface of the axle in a cross-array configuration. As the enclosure spins about axis **X-X'** which is coincident with the axle **10,** a pair of brushes **18** are used to enable the cross-array of electromagnets **A, B, C and D** in a similar manner as was disclosed in connection with the previously described embodiments. The sequential and alternate distribution of the feeding current to the electromagnets including their polarity commutation are accomplished according the techniques well known to those with ordinary skill in the art.

It should be understood that the directional bearing locator of the first embodiment of the drive mechanism could be used in connection with the second described embodiment and vice versa, and that the antenna and radio frequency wave receiver could be used in connection with any of the embodiments of the mechanical drive.

The below-described improvements to the various drive mechanisms are not essential to the operation of the preferred embodiment, yet they can advantageously enhance its performances.

In order to cancel any possible effect of the magnetic field generated by the electromagnets **AC** and **BD** upon the magnetic directional bearing locator used in some of the previously described versions of the drive mechanisms, a set of four bucking coils **ac, bd, ca, and db** can be mounted around the compass magnet **21** as illustrated in Figures 4 and 5. It should be noted that the four bucking coils and the electromagnets are normally fixedly connected to the enclosure **3.** Bucking coils **bd and db** are aligned with electromagnet **BD,** and bucking coil **ac** and **ca** are aligned with electromagnet **AC.**

The circuit illustrated in Figure 6, is used to control the flow of polarizing current through both the electromagnets and the bucking coils. The object is to create through the bucking coils, a magnetic field which is, in the vicinity of the compass magnet **21,** substantially equal and opposite to the one concurrently being generated by the corresponding electromagnet by appropriately turning on the transistor switches **T1-T8.** Is should be noted that, depending upon the type and position of the sensors **a, b, c and d,** the wiring connections of the various bobbins and coils has to be appropriately switched. In some cases two single orthogonally disposed bucking coils rather than pairs of them may suffice.

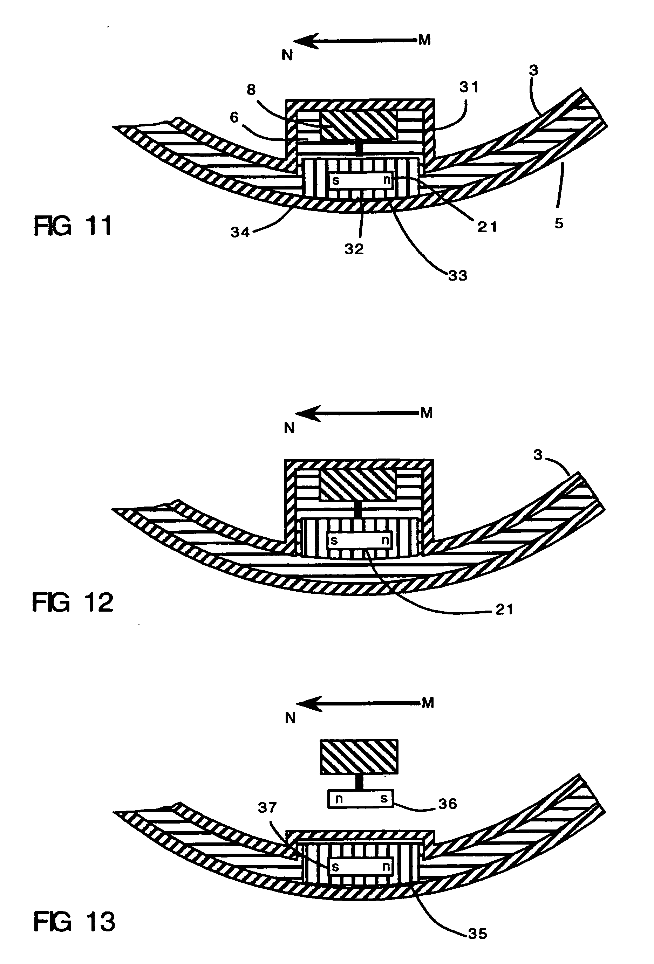

The directional bearing locator and drive mechanism need not always be mounted inside the enclosure **3.** As illustrated in Figures 11-13, those two elements are immersed in the fluid **6,** and fitted into a cylindrical cavity **31** at the South pole of the enclosure **3.** In Figure 11, the drive mechanism consists of the electrical motor **8** fixedly attached to the enclosure, and having its rotor and axle **10** fixedly attached to the directional bearing locator. The latter consists of a magnet **21** buried into a pivotacting puck **32** having an undersurface **33** spherically contoured to closely match the bottom section **34** of the container. A thin film of fluid between the two surfaces allows for the proper alignment of the magnet with the geomagnetic field. A non-magnetized puck may be used. The puck, in response to gravity or the ambient field of intermolecular forces, creates enough friction or shear forces in the film of fluid or static friction against the bottom surface of the container to provide the counter-torque necessary to the motor to spin the enclosure. The bottom of the puck may also be kept distally from the container as shown in Figure 12.

In the embodiment of the drive mechanism shown in Figure 13, while the directional bearing locator is outside the enclosure, the motor is within. Coupling between the motor axle and the puck 35 is provided across the enclosure wall by means of matching magnets **36, 37,** one attached to the axle, the other to the puck. Appropriate bearings may be used between the puck and the enclosure, and the respective locations of the motor and puck may be inverted. In which case, the feeding current may be derived from structures located without the enclosure.

The enclosure **3** in Fig. 12 could also be powered to rotate by means of a magnetic interaction between magnet **21** and a rotating ambient magnetic field, generated, for example, by means integral to a support, not shown, for the container **5.** The rotation of the enclosure could be enhanced in this way when the motor **8** is being supplied current. Furthermore, the rotation could be driven even when the motor **8** is not being supplied current. A similar embodiment could be made without the motor **8,** and be driven only by the rotating ambient magnetic field and a magnet **21.**

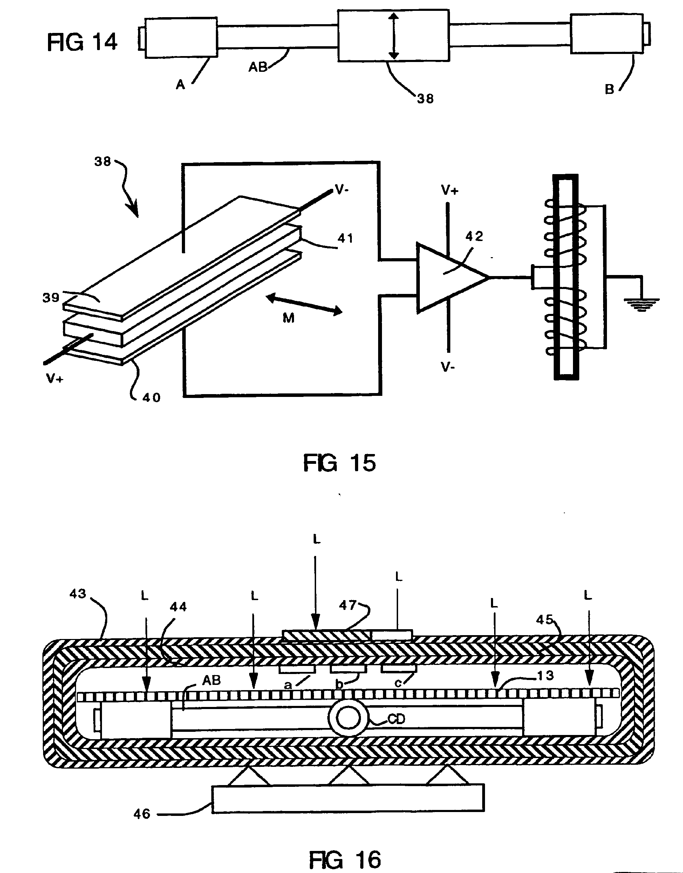

Instead of a cross-array of electromagnets, a single electromagnet may suffice to drive a particularly light enclosure. As illustrated in Figures 14 and 15, a single sensor **38** mounted on a single electromagnet **AB** can be advantageously used to control the polarization of the bobbins **A and B.**

As more specifically shown in Figure 15, a bipolar voltage (V+, V-) is applied to plates **39, 40** sandwiching an elongated Hall-Effect sensing element **41.** The element is mounted horizontally on the electromagnet or its support axle. When the ambient magnetic field **M** is perpendicular to the element **41,** it generates a Hall Voltage between the plates **39, 40.**

If the direction of the magnetic field is reversed, the polarity of the Hall Voltage will be inverted. Thus, the Hall Voltage can be applied to the bobbins **A, B** through an amplifier **42** to control their directional polarization.

If the sensor element **38** is perpendicular to the electromagnet as shown in Figure 14, the latter will be energized only when it is out of alignment with the ambient magnetic field.

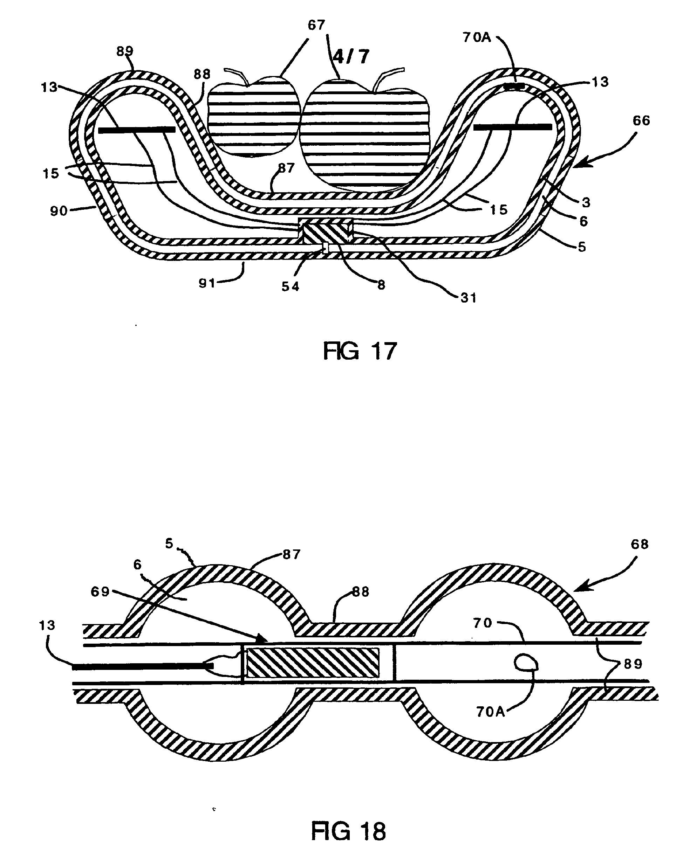

The container and enclosures may take a variety of shapes. Illustrated in Figure 16 is a set of nested cylindrical structures in which the outer one **43** acts like the container and the inner one **44** acts as the enclosure of the previously described embodiment. Both structures and the separating fluid **45** are light permeable. The outer structure **43** rest on a support **46.** The directional bearing locator is simply constituted by a shutter pattern **47** printed upon, or embedded into the central top portion of the outer structure **43.** This pattern is essentially similar to the shape of the shutter illustrated in Figures 4 and 5, and must be manually oriented so that the center of the angular cutout appropriately controls the energizing of the electromagnets.

Photosensors **a, b, c, d** (the latter not shown on the cross-sectional view) are installed against or into the roof of the enclosure **44** in a cross-arrangement under the shutter pattern. The main photovoltaic collector **13** and electromagnet array **AB** and **CD** are essentially similar to those described in the embodiments of Figures 4 and 5.

An bowl shaped embodiment **66** of the structure is illustrated in Figure 17, which comprises a container 5 comprising an internal wall **88,** spaced apart from an external wall **90,** a base **91** integral with the external wall **90,** a bottom **87** integral with the internal wall **88** and spaced apart from the base **91,** and an edge area **89** where the internal wall **88** joins the external wall **90.** Internal wall **88,** external wall **90,** base **91,** bottom **87** and edge part **89** are intended to be joined together to form a hollow, preferably sealed container, containing, and preferably filled by, a fluid **6** and a bowl shaped enclosure **3** nested within container **5.** The net density of the bowl shaped enclosure **3** is preferably the same as the fluid **6.**

The bowl shaped enclosure **3** comprises wires **15** for delivering current from photovoltaic cells **13** to a motor **8** mounted within a cylindrical cavity **56.** The bowl shaped enclosure **3** has a visible feature **70A** shown on the top edge of bowl shaped enclosure **3**, but it us understood that the enclosure **3** could have this visible feature at other positions.

The materials, shape and dimensions of the container **5,** fluid **6** and bowl shaped enclosure **3** are chosen so that the bowl shaped enclosure **3** has at least one visible feature **70A** that is displayed, kinetically that is, on the outer surface of container **5.**

While structure **66** is the preferred embodiment for a bowl embodiment, it is understood that many similar embodiments fall within the scope of the instant invention. For example, the bowl shaped enclosure **3** need not be hollow as shown in Fig 17. The overall shape of the structure could be an inverted cone shape, with only inside walls and outside walls. The volume between the body **3** and container need not be sealed or completely filled with fluid **6.** The bowl shaped enclosure **3** could be replaced, as in Fig.8, by a fan **63** and the fluid **6** could contain one or more bodies of arbitrary shape, substantially buoyantly supported by the fluid **6.**

Objects **67** can be contained within the bowl shaped depression formed by the bottom **87** and the inside wall **88** of container **5**.

A section of a sixth alternate embodiment **68** of the structure is illustrated in Figures 18 and 19. A section of a preferably transparent container **5** includes an alternating sequence of hollow cylindrical areas **88** and hollow spherical areas **87.** A preferably translucent tube shaped body **70** passes through the hollow passages in the cylindrical parts **87** and spherical parts **88** of container **5.** A fluid **6** preferably fills the space between the outside surface of the tube body **70** and the inside surfaces of the container **5.** The net density of the tube **70** is preferably the same as the fluid density, and the density of the tube is preferably uniform along its length. The tube **70** preferably includes at least one visual feature **70A** which will be visible on the surface of the cylindrical parts **88** of the container due to the dimensions and index of refraction of the fluid, and container material. Preferably, visual features of the tube body **70** will not appear on the surface of at least one of the spherical areas of the container. A photovoltaic cell **13** mounted within the tube **70** supplies current to a drive assembly **69** mounted within the tube body **70.**

Embodiment **68** is an example of an embodiment wherein contact with the arcuate wall area 88 can exist between area **88** and an external object that is stationary with respect to area **88,** or can exist between area **88** and an object that is part of container **5,** such as spherical part **87,** which is not designed to kinetically display, on its surface, visual feature **70A.**

The drive assembly **69** shown in Figure 19 comprises a motor **8** mounted within the tube **70** by means of element **71.** Current is supplied to the motor by means of wires **15.** The motor output shaft **76** drives the rotation of a propeller **77** and is supported at its distal end by a journal bearing **78.** Holes **73** and **74** in the wall of the tube body **70** allow fluid **79** to be drawn in holes **73** and pushed out holes **74** to create a thrust, urging the tube **70** to move to the left.

The structure **68** can be a section of a longer linear structure or a longer circular structure of the same form. In the case of a linear structure, motion of the tube will be linear, and can be periodically reversed or the motion can be rotational about the long axis of the body **70.** In the case of a circular structure, motion will be circular and can be continuous or reciprocating. In either case, a casual observer will see the spherical parts as independent objects threaded by a moving tube part. The spherical parts could have other shapes such as cubic and still show the same effect and the cross sectional shape of the cylindrical part **88** and tube **70** could have other, preferably similar, cross sectional shapes. Various other drive mechanisms described herein could also be adapted to drive such bodies.

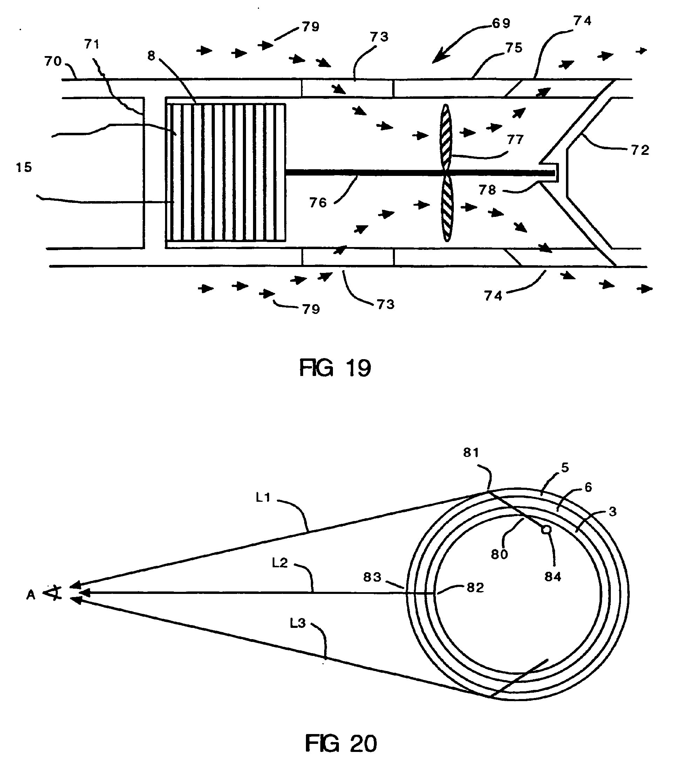

Figure 20 illustrates how a visible feature **80** on the inside surface of a translucent spherical body **3** surrounded by a fluid **6,** will appear to an observer **A** to be displayed on the outside surface of a spherical, preferably transparent, container **5,** according to well known laws of refraction. Light ray **L1** originating at feature 80 on the inside surface of body 3 is shown propagating first to position **81** on the outside surface of container **5** and then on to an observer **A.** Light ray **L1** is shown tangent to the surface of container **5** at location **81.** Similar rays **L3** are indicated in the lower part of Figure 20. Light ray **L2** originating at visual feature **82** on the inside surface of body **3** is shown propagating first to position **83** on the outside surface of container **5** and then on to observer **A.** For simplicity, Light ray **L1** is shown as following a straight path from feature **80** to location **81,** as it would if the indexes of refraction of the materials of body **3,** fluid **6,** and container **5** were the same. It is understood that small differences in these indexes of refraction would cause the light path to deviate from a straight line without substantially changing the result. An observer at position **A** will thus see a visual feature **80** on the body **3** displayed on the surface of container 5 at location **81.** Light ray **L2** originating on the inside surface of body **3** at visual feature **82** will move along a straight path to observer **A** because the light passes perpendicularly through the interfaces between different materials along its path.

It is understood that light originating on a visible feature located anywhere along light ray **L1,** particularly inside container **5,** can be seen as displayed on the outer surface of container **5** at position **81.** Thus, a feature on the inside surface, within the wall, or on the outer surface of body **3,** within the fluid **6,** on the inside surface, within the wall, or on the outside surface of container **5,** or on an intermediate shell, such as **51** of Fig. 7, could be displayed on the outside surface of the substantially transparent container **5** at location **81.** A visual feature **84** located within body 3 could also follow light ray path **L1** and be displayed at location **81.**

A casual observer at position A will see visual feature **80** kinetically displayed on the surface of the container **5** at position **81** whenever the visual feature **80** is actually moving, and the observer at **A** will believe that visible feature **80** is actually on the surface of container **5** at position **81** and that the surface of the container **5** is actually moving at position **81.** The observer at position **A** may also judge other positions, such as **83** of the outer surface of container **5,** to be moving, depending on their proximity to position **81** and to similar, apparently moving areas. This illusion is particularly interesting if an apparently stationary object or visual feature is in contact with the outer surface of container **5** at positions judged to be moving.

While the preferred embodiments of the invention have been described, modifications can be made and other embodiments may be devised without departing from the scope of the appended claims.

## Claims

1. A self powered, animated structure which comprises:
a container (5) which comprises at least one transparent, arcuate wall portion having an outer surface area;
a body (3), within said container, having a first visible feature
means (6) for moving said body with respect to said container;
means (8), within said container, for refractively and kinetically displaying said first visible feature on said outer surface area;
whereby, to a casual observer, said outer surface area appears to move with said body.

2. The structure of claim 1, wherein said means for displaying comprise:
a thin layer of fluid between said body and said wall portion, said fluid having an index of refraction larger that of air.

3. The structure of claim 2 wherein a volume of said fluid is held within said container; and
wherein said body is immersed in said fluid.

4. The structure of claim 3 wherein said container and said body have substantially similar shapes,
said body being nested within said container.

5. The structure of claim 2 which further comprises an object in contact with said outer surface;
whereby said outer surface appears to be moving with respect to said object.

6. The structure of claim 2 wherein said means for moving is powered by energy derived from electromagnetic radiations, and biased by the direction of an ambient field of energy.

7. The structure of claim 6 wherein said body further comprises:
an enclosure substantially buoyantly supported by a volume of said fluid,
a directional bearing locator associated with said enclosure and responsive to said ambient field of energy;
means for collecting energy from said electromagnetic radiations; and
wherein said drive mechanism comprises means for moving said enclosure in reference to said locator and in response to said means for collecting.

8. The structure of claim 7 wherein said means for moving comprise an electromechanical device for rotating said enclosure about a first axis.

9. The structure of claim 8 wherein:
said electromagnetic radiation comprises light waves; and
said means for collecting comprise a photovoltaic collector generating an electrical current when exposed to said light waves.

10. The structure of claim 9 wherein said electro-mechanical device comprises an electrical motor energized by said electrical current.

11. The structure of claim 8 wherein:
said electromagnetic radiation comprises radio frequency waves; and
said means for collecting comprise an antenna and a radio frequency receiver generating an electrical current when said antenna is exposed to said radio frequency waves.

12. The structure of claim 11 wherein said electromechanical device comprises an electrical motor powered by said electrical current.

13. The structure of claim 8 wherein:
said ambient field of energy comprises the earth gravity: and
said locator comprises a gravity force sensor.

14. The structure of claim 13 wherein said gravity force sensor comprise a weight mounted on an axle substantially aligned with said axis;
said weight having a center of gravity held distally from said axis.

15. The structure of claim 8 wherein:
said ambient field of energy comprises the earth magnetic field; and said locator comprises means for detecting said earth magnetic field.

16. The structure of claim 8, wherein:
said enclosure is held within said container and spaced apart thereof by said fluid.

17. The structure of claim 16, wherein said enclosure and said container are closed and said fluid substantially surrounds said enclosure
wherein said enclosure and said container have similar shapes.

18. The structure of claim 17 wherein said enclosure and said container consist of hollow spheres.

19. The structure of claim 17 wherein said enclosure and said container are made of light permeable material;
said electromagnetic radiation comprises light waves;
said means for collecting comprise a photovoltaic collector associated with said structure, generating electrical current when exposed to said light waves.

20. The structure of claim 17 wherein said electromagnetic radiation comprises radio frequency waves;
said means for collecting comprise an antenna and a radio frequency receiver generating an electrical current when said antenna is exposed to said radio frequency waves;
said electro-mechanical device is powered by said current.

21. The structure of claim 8 wherein said electromechanical device comprises:
a motor having a rotor and a stator, one of said rotor and stator being fixedly attached to said enclosure, and the other fixedly attached to said locator.

22. The structure of claim 8 wherein said ambient field of energy comprises a magnetic field; and
said electromechanical device comprises:
at least one magnetic field sensor responsive to said magnetic field; and
means for repeatedly enabling said sensor.

23. The structure of claim 22 wherein said locator comprises a magnetic field sensor.

24. The structure of claim 22, wherein:
each of said sensors comprises an electromagnet which when enabled rotatably aligns itself with said magnetic field; and
said means for enabling comprise means for selectively applying a feeding current to said electromagnet.

25. The structure of claim 24 wherein means for selectively enabling comprise a commutating mechanism connectively biased by said locator to enable said electromagnet when said electromagnet is not aligned with said magnetic field.

26. The structure of claim 25 wherein said electromagnetic radiations further comprise light waves;
said means for collecting energy comprise a photovoltaic collector responsive to light waves impinging upon said enclosure and having an output connectable to said electromagnet; and
said commutating mechanism comprises a shutter associated with said locator, said shutter being shaped and dimensioned to selectively mask said photovoltaic collector when said electromagnet is aligned with said magnetic field.

27. The structure of claim 25 wherein said electromagnetic radiations further comprise radio frequency waves;
said means for collecting comprise an antenna and a radio frequency receiver generating an electrical current when said antenna is exposed to said radio frequency waves; and
said commutating mechanism comprises an electrical impulse distributor responsive to the orientation of said locator in relation to each of said electromagnets to selectively apply said current to said electromagnet.

28. The structure of claim 25 wherein the magnetic field comprises the earth's magnetic field.

29. The structure of claim 25 which further comprises at least one means positioned outside said enclosure to generate said magnetic field.

30. The structure of claim 13, wherein said gravity force sensor comprises a weight rotatably connected to said enclosure, said weight having a center of gravity held distally from said axis.

31. The structure of claim 24 wherein said means for selectively applying comprise a mechanism responsive to the relative orientation of said magnetic field and the direction of aid ambient field of energy.

32. The structure of claim 31; wherein;
said ambient field of energy comprises light waves impinging upon said enclosure; and
said mechanism comprises:
at least two photosensors for producing control currents for said electromagnet;
each of said sensors having a photosensitive surface,
wherein the photo-sensitive surface of each of said sensors lies within a different plane than the plane of the photosensitive surface of any other sensor.

33. The structure of claim 32, which further comprises at least one photovoltaic collector having a photo-sensitive surface, and producing said feeding current.

34. The structure of claim 15 wherein said electromechanical device comprises at least one electromagnet generating a polarizing magnetic field; and
which further comprises at least one coil proximate to said means for detecting, and to energize said coil and create a corrective magnetic field opposite to said polarizing magnetic field.

35. The structure of claim 22, wherein said means for repeatedly enabling said sensor comprises means mounted on said magnetic field sensor, for generating a voltage having a polarity responsive to the orientation of said sensor.

36. The structure of claim 1 including a second visual feature, wherein said first and second visual features cooperatively move relative to each other.

37. The structure of claim 3, wherein said container and said body have substantially toroidal shapes.

38. The structure of claim 1 wherein said container is substantially bowl shaped comprising:
an external wall
an internal wall spaced apart from said external wall
a base integral with a lower section of said external wall
a bottom spaced apart from said base and being integral with a lower section of said internal wall
a top edge joining upper sections of said walls.

39. The structure of claim 37 wherein at least one section of said container is made with materials and dimensions predetermined for not displaying said first visible feature on said outer surface area of said container.

40. The structure of claim 4 wherein said container is substantially bowl shaped comprising:
an external wall
an internal wall spaced apart from said external wall
a base integral with a lower section of said external wall
a bottom spaced apart from said base and being integral with a lower section of said internal wall
a top edge joining upper sections of said walls
wherein said body is substantially bowl shaped and nested within said bowl shaped container

## Patentansprüche

1. Selbstangetriebene animierte Struktur, welche aufweist:
einen Container (5), welcher zumindest einen transparenten, gekrümmten Wandabschnitt mit einem Außenflächengebiet aufweist;
einen Körper (3) innerhalb des Containers, der ein erstes visuell wahrnehmbares Merkmal aufweist;
Mittel (6) zum Bewegen des Körpers bezüglich des Containers;
Mittel (8) innerhalb des Containers zum lichtbrechenden und kinetischen Darstellen des ersten visuell wahrnehmbaren Merkmals auf dem Außenflächengebiet;
wobei es einem flüchtigen Beobachter scheint, dass sich das Außenflächengebiet mit dem Körper bewegt.

2. Struktur von Anspruch 1, wobei die Mittel zum Darstellen aufweisen:
eine dünne Flüssigkeitsschicht zwischen dem Körper und dem Wandabschnitt, wobei die Flüssigkeit einen Brechungsindex größer als von Luft aufweist.

3. Struktur von Anspruch 2, wobei ein Volumen der Flüssigkeit innerhalb des Containers gehalten wird; und
wobei der Körper in der Flüssigkeit eingetaucht ist.

4. Struktur von Anspruch 3, wobei der Container und der Körper im Wesentlichen gleichartige Formen haben,
wobei der Körper innerhalb des Containers eingebettet ist.

5. Struktur von Anspruch 2, welche ferner einen Gegenstand in Kontakt mit der Außenfläche aufweist; mit dessen Hilfe es den Anschein hat, dass sich die Außenfläche bezüglich des Gegenstandes bewegt.

6. Struktur von Anspruch 2, wobei die Mittel zum Bewegen durch aus elektromagnetischen Strahlungen abgeleitete Energie gespeist und durch die Richtung eines Umgebungs-Energiefeldes ausgerichtet werden.

7. Struktur von Anspruch 6, wobei der Körper ferner aufweist:
ein Gehäuse, das im Wesentlichen schwimmend durch ein Volumen der Flüssigkeit getragen wird;
einen Richtungslage-Positionsgeber, der mit dem Gehäuse verbunden ist und auf das Umgebungs-Energiefeld reagiert;
Mittel zum Sammeln von Energie aus den elektromagnetischen Strahlungen; und
wobei der Antriebsmechanismus Mittel zum Bewegen des Gehäuses in Bezug auf den Positionsgeber und in Antwort auf die Mittel zum Sammeln aufweist.

8. Struktur von Anspruch 7, wobei die Mittel zum Bewegen eine elektromechanische Einrichtung zum Drehen des Gehäuses um eine erste Achse aufweisen.

9. Struktur von Anspruch 8, wobei:
die elektromagnetische Strahlung Lichtwellen aufweist; und
die Mittel zum Sammeln einen photovoltaischen Kollektor aufweisen, der einen elektrischen Strom erzeugt, wenn er den Lichtwellen ausgesetzt ist.

10. Struktur von Anspruch 9, wobei die elektromechanische Einrichtung einen Elektromotor aufweist, dem durch den elektrischen Strom Energie zugeführt wird.

11. Struktur von Anspruch 8, wobei:
die elektromagnetische Strahlung Hochfrequenzwellen aufweist; und
die Mittel zum Sammeln eine Antenne und einen Hochfrequenzempfänger aufweisen, der einen elektrischen Strom erzeugt, wenn die Antenne den Hochfrequenzwellen ausgesetzt ist.

12. Struktur von Anspruch 11, wobei die elektromechanische Einrichtung einen Elektromotor aufweist, der durch den elektrischen Strom mit Energie versorgt wird.

13. Struktur von Anspruch 8, wobei:
das Umgebungs-Energiefeld die Gravitation der Erde aufweist; und
der Positionsgeber einen Gravitationskraft-Sensor aufweist.

14. Struktur von Anspruch 13, wobei der Gravitationskraft-Sensor ein Gewicht aufweist, das an einer Welle befestigt ist, die im Wesentlichen nach der Achse ausgerichtet ist;
wobei das Gewicht einen distal von der Achse gehaltenen Schwerpunkt aufweist.

15. Struktur von Anspruch 8, wobei:
das Umgebungs-Energiefeld das Erdmagnetfeld aufweist; und
der Positionsgeber Mittel zum Erfassen des Erdmagnetfeldes aufweist.

16. Struktur von Anspruch 8, wobei:
das Gehäuse innerhalb des Containers gehalten wird und durch die Flüssigkeit mit Abstand von diesem angeordnet ist.

17. Struktur von Anspruch 16, wobei das Gehäuse und der Container geschlossen sind und die Flüssigkeit im Wesentlichen das Gehäuse umgibt,
wobei das Gehäuse und der Container ähnliche Formen aufweisen.

18. Struktur von Anspruch 17, wobei das Gehäuse und der Container aus Hohlkugeln bestehen.

19. Struktur von Anspruch 17, wobei das Gehäuse und der Container aus einem lichtdurchlässigen Material hergestellt sind;
die elektromagnetische Strahlung Lichtwellen aufweist;
die Mittel zum Sammeln einen mit der Struktur verbundenen photovoltaischen Kollektor aufweisen, der elektrischen Strom erzeugt, wenn er den Lichtwellen ausgesetzt ist.

20. Struktur von Anspruch 17, wobei die elektromagnetische Strahlung Hochfrequenzwellen aufweist;
die Mittel zum Sammeln eine Antenne und einen Hochfrequenzempfänger aufweisen, der einen elektrischen Strom erzeugt, wenn die Antenne den Hochfrequenzwellen ausgesetzt ist;
die elektromechanische Einrichtung durch den Strom mit Energie versorgt wird.

21. Struktur von Anspruch 8, wobei die elektromechanische Einrichtung aufweist:
einen Motor mit einem Rotor und einem Stator, wobei einer von dem Rotor und dem Stator fest an dem Gehäuse befestigt ist und der andere fest an dem Positionsgeber befestigt ist.

22. Struktur von Anspruch 8, wobei das Umgebungs-Energiefeld ein Magnetfeld aufweist; und
die elektromechanische Einrichtung aufweist:
zumindest einen Magnetfeldsensor, der auf das Magnetfeld reagiert; und
Mittel zum wiederholten Aktivieren des Sensors.

23. Struktur von Anspruch 22, wobei der Positionsgeber einen Magnetfeldsensor aufweist.

24. Struktur von Anspruch 22, wobei:
jeder der Sensoren einen Elektromagneten aufweist, welcher, wenn er aktiviert ist, sich drehbar selbst nach dem Magnetfeld ausrichtet; und
die Mittel zum Aktivieren Mittel zum selektiven zuführen eines Speisestromes zu dem Elektromagneten aufweisen.

25. Struktur von Anspruch 24, wobei die Mittel zum selektiven Aktivieren einen Kommutierungsmechanismus aufweisen, der in Verbindung durch den Positionsgeber ausgerichtet ist, um den Elektromagneten zu aktivieren, wenn der Elektromagnet nicht nach dem Magnetfeld ausgerichtet ist.

26. Struktur von Anspruch 25, wobei die elektromagnetischen Strahlungen ferner Lichtwellen aufweisen;
die Mittel zum Sammeln von Energie einen photovoltaischen Kollektor aufweisen, der auf Lichtwellen reagiert, die auf das Gehäuse auftreffen, und der einen Ausgang aufweist, der mit dem Elektromagneten verbunden werden kann; und
der Kommutierungsmechanismus eine mit dem Positionsgeber verbundene Blende aufweist, wobei die Blende geformt und dimensioniert ist, um den photovoltaischen Kollektor selektiv abzudecken, wenn der Elektromagnet nach dem Magnetfeld ausgerichtet ist.

27. Struktur von Anspruch 25, wobei die elektromagnetischen Strahlungen ferner Hochfrequenzwellen aufweisen;
die Mittel zum Sammeln eine Antenne und einen Hochfrequenzempfänger aufweisen, der einen elektrischen Strom erzeugt, wenn die Antenne den Hochfrequenzwellen ausgesetzt ist; und
der Kommutierungsmechanismus einen elektrischen Impulsverteiler aufweist, der auf die Orientierung des Positionsgebers in Beziehung zu jedem der Elektromagnete reagiert, um den Strom selektiv dem Elektromagneten zuzuführen.

28. Struktur von Anspruch 25, wobei das Magnetfeld das Erdmagnetfeld aufweist.

29. Struktur von Anspruch 25, welche ferner zumindest ein außerhalb des Gehäuses positioniertes Mittel aufweist, um das Magnetfeld zu erzeugen.

30. Struktur von Anspruch 13, wobei der Gravitationskraft-Sensor ein Gewicht aufweist, das mit dem Gehäuse drehbar verbunden ist, wobei das Gewicht einen distal von der Achse gehaltenen Schwerpunkt aufweist.

31. Struktur von Anspruch 24, wobei die Mittel zum selektiven Zuführen einen Mechanismus aufweisen, der auf die relative Orientierung des Magnetfelds und der Richtung eines Hilfs-Umgebungs-Energiefeldes reagiert.

32. Struktur von Anspruch 31, wobei:
das Umgebungs-Energiefeld Lichtwellen aufweist, die auf das Gehäuse auftreffen; und
der Mechanismus aufweist:
zumindest zwei Photosensoren zum Erzeugen von Steuerströmen für den Elektromagneten;
wobei jeder der Sensoren eine photosensitive Fläche aufweist, wobei die photosensitive Fläche von jedem der Sensoren in einer anderen Ebene als die Ebene der photosensitiven Fläche von irgendeinem anderen Sensor liegt.

33. Struktur von Anspruch 32, welche ferner zumindest einen photovoltaischen Kollektor, der eine photosensitive Fläche aufweist und der den Speisestrom erzeugt, aufweist.

34. Struktur von Anspruch 15, wobei die elektromechanische Einrichtung zumindest einen Elektromagneten aufweist, der ein Polarisations-Magnetfeld erzeugt; und
welche ferner zumindest eine Spule nahe den Mitteln zum Erfassen aufweist, und um der Spule Energie zuzuführen und ein Korrektur-Magnetfeld entgegengesetzt zu dem Polarisations-Magnetfeld zu erzeugen.

35. Struktur von Anspruch 22, wobei die Mittel zum wiederholten Aktivieren des Sensors Mittel, die an dem Magnetfeldsensor befestigt sind, zum Erzeugen einer Spannung mit einer Polarität, die auf die Orientierung des Sensors reagiert, aufweisen.

36. Struktur von Anspruch 1, die ein zweites visuelles Merkmal aufweist, wobei sich das erste und das zweite visuelle Merkmal kooperativ relativ zueinander bewegen.

37. Struktur von Anspruch 3, wobei der Container und der Körper im Wesentlichen torische Formen aufweisen.

38. Struktur von Anspruch 1, wobei der Container im Wesentlichen schalenförmig geformt ist, aufweisend:
eine Außenwand,
eine Innenwand, die von der Außenwand mit Abstand angeordnet ist,
eine Basis integral mit einem unteren Abschnitt der Außenwand,
einen Boden, der von der Basis mit Abstand angeordnet ist und integral mit einem unteren Abschnitt der Innenwand ist,
einen oberen Rand, der die oberen Abschnitte der Wände verbindet.

39. Struktur von Anspruch 37, wobei zumindest ein Abschnitt des Containers mit Materialien und Abmessungen hergestellt ist, die vorherbestimmt sind, um das erste visuell wahrnehmbare Merkmal auf dem Außenflächengebiet des Containers nicht darzustellen.

40. Struktur von Anspruch 4, wobei der Container im Wesentlichen schalenförmig geformt ist, aufweisend:
eine Außenwand,
eine Innenwand, die von der Außenwand mit Abstand angeordnet ist,
eine Basis integral mit einem unteren Abschnitt der Außenwand,
einen Boden, der von der Basis mit Abstand angeordnet ist und integral mit einem unteren Abschnitt der Innenwand ist,
einen oberen Rand, der die oberen Abschnitte der wände verbindet, wobei der Körper im Wesentlichen schalenförmig ist und innerhalb des schalenförmigen Containers eingebettet ist.

## Revendications

1. Structure animée autonome comprenant :
un conteneur (5) qui comprend au moins une partie de paroi arquée transparente ayant une zone de surface extérieure ;
un corps (3), à l'intérieur dudit conteneur, ayant une première caractéristique visible
des moyens (6) pour déplacer ledit corps par rapport audit conteneur ;
des moyens (8), à l'intérieur dudit conteneur, pour afficher de façon réfractive et cinétique ladite première caractéristique visible sur ladite zone de surface extérieure ;
moyennant quoi, pour un observateur occasionnel, ladite zone de surface extérieure semble se déplacer avec ledit corps.

2. Structure selon la revendication 1, dans laquelle lesdits moyens d'affichage comprennent :
une fine couche de fluide entre ledit corps et ladite partie de paroi, ledit fluide ayant un indice de réfraction supérieur à celui de l'air.

3. Structure selon la revendication 2, dans laquelle un volume dudit fluide est maintenu dans ledit conteneur ; et
dans laquelle ledit corps est immergé dans ledit fluide.

4. Structure selon la revendication 3, dans laquelle ledit conteneur et ledit corps ont des formes sensiblement similaires, ledit corps étant niché à l'intérieur dudit conteneur.

5. Structure selon la revendication 2, comprenant en outre un objet en contact avec ladite surface extérieure ;
moyennant quoi ladite surface extérieure semble se déplacer par rapport audit objet.

6. Structure selon la revendication 2, dans laquelle lesdits moyens de déplacement sont alimentés par une énergie dérivée de rayonnements électromagnétiques, et polarisés par la direction d'un champ d'énergie ambiant.

7. Structure selon la revendication 6, dans laquelle ledit corps comprend en outre :
une enceinte supportée de façon sensiblement flottante par un volume dudit fluide,
un dispositif de positionnement à roulement directionnel associé à ladite enceinte et répondant audit champ d'énergie ambiant ;
des moyens pour collecter l'énergie desdits rayonnements électromagnétiques ; et
dans laquelle ledit mécanisme d'entraînement comprend des moyens pour déplacer ladite enceinte en référence audit dispositif de positionnement et en réponse auxdits moyens de collecte.

8. Structure selon la revendication 7, dans laquelle lesdits moyens de déplacement comprennent un dispositif électromécanique pour faire tourner ladite enceinte autour d'un premier axe.

9. Structure selon la revendication 8, dans laquelle :
ledit rayonnement électromagnétique comprend des ondes lumineuses ; et
lesdits moyens de collecte comprennent un collecteur photovoltaïque générant un courant électrique lorsqu'il est exposé auxdites ondes lumineuses.

10. Structure selon la revendication 9, dans laquelle ledit dispositif électromécanique comprend un moteur électrique alimenté par ledit courant électrique.

11. Structure selon la revendication 8, dans laquelle :
ledit rayonnement électromagnétique comprend des ondes radioélectriques ; et
lesdits moyens de collecte comprennent une antenne et un récepteur radiofréquence générant un courant électrique lorsque ladite antenne est exposée auxdites ondes radioélectriques.

12. Structure selon la revendication 11, dans laquelle dispositif électromécanique comprend un moteur électrique alimenté par ledit courant électrique.

13. Structure selon la revendication 8, dans laquelle :
ledit champ d'énergie ambiant comprend la gravité terrestre ; et
ledit dispositif de positionnement comprend un capteur de force de gravité.

14. Structure selon la revendication 13, dans laquelle ledit capteur de force de gravité comprend un poids monté sur un essieu sensiblement aligné sur ledit axe ;
ledit poids ayant un centre de gravité maintenu distalement par rapport audit axe.

15. Structure selon la revendication 8, dans laquelle :
ledit champ d'énergie ambiant comprend le champ magnétique terrestre ; et
ledit dispositif de positionnement comprend des moyens pour détecter ledit champ magnétique terrestre.

16. Structure selon la revendication 8, dans laquelle :
ladite enceinte est maintenue à l'intérieur dudit conteneur et espacée de celui-ci par ledit fluide.

17. Structure selon la revendication 16, dans laquelle ladite enceinte et ledit conteneur sont fermés et ledit fluide entoure sensiblement ladite enceinte
dans laquelle ladite enceinte et ledit conteneur ont des formes similaires.

18. Structure selon la revendication 17, dans laquelle ladite enceinte et ledit conteneur consistent en des sphères creuses.

19. Structure selon la revendication 17, dans laquelle ladite enceinte et ledit conteneur sont fait d'un matériau perméable léger ;
ledit rayonnement électromagnétique comprend des ondes lumineuses ;
lesdits moyens de collecte comprennent un collecteur photovoltaïque associé à ladite structure, générant du courant électrique lorsqu'il est exposé auxdites ondes lumineuses.

20. Structure selon la revendication 17, dans laquelle ledit rayonnement électromagnétique comprend des ondes radioélectriques ;
lesdits moyens de collecte comprennent une antenne et un récepteur radiofréquence générant un courant électrique lorsque ladite antenne est exposée auxdites ondes radioélectriques ;
ledit dispositif électromécanique est alimenté par ledit courant.

21. Structure selon la revendication 8, dans laquelle ledit dispositif électromécanique comprend :
un moteur ayant un rotor et un stator, l'un desdits rotor et stator étant fixement attaché à ladite enceinte, et l'autre étant fixement attaché audit dispositif de positionnement.

22. Structure selon la revendication 8, dans laquelle ledit champ d'énergie ambiant comprend un champ magnétique ; et
ledit dispositif électromécanique comprend :
au moins un capteur de champ magnétique répondant audit champ magnétique ; et
des moyens pour activer de façon répétée ledit capteur.

23. Structure selon la revendication 22, dans laquelle ledit dispositif de positionnement comprend un capteur de champ magnétique.

24. Structure selon la revendication 22, dans laquelle :
chacun desdits capteurs comprend un électroaimant qui, lorsqu'il est activé, s'aligne sur ledit champ magnétique ; et
lesdits moyens d'activation comprennent des moyens pour appliquer sélectivement un courant d'alimentation audit électroaimant.

25. Structure selon la revendication 24, dans laquelle les moyens d'activation sélective comprennent un mécanisme de commutation polarisé de façon connective par ledit dispositif de positionnement pour activer ledit électroaimant lorsque ledit électroaimant n'est pas aligné sur ledit champ magnétique.

26. Structure selon la revendication 25, dans laquelle lesdits rayonnements électromagnétiques comprennent en outre des ondes lumineuses ;
lesdits moyens de collecte d'énergie comprennent un collecteur photovoltaïque répondant aux ondes lumineuses heurtant ladite enceinte et ayant une sortie connectable audit électroaimant ; et
ledit mécanisme de commutation comprend un volet obturateur associé audit dispositif de positionnement, ledit volet obturateur étant formé et dimensionné pour sélectivement masquer ledit collecteur photovoltaïque lorsque ledit électroaimant est aligné sur ledit champ magnétique.

27. Structure selon la revendication 25, dans laquelle lesdits rayonnements électromagnétiques comprennent en outre des ondes radioélectriques ;
lesdits moyens de collecte comprennent une antenne et un récepteur radiofréquence générant un courant électrique lorsque ladite antenne est exposée auxdites ondes radioélectriques ; et
ledit mécanisme de commutation comprend un distributeur d'impulsions électriques répondant à l'orientation dudit dispositif de positionnement par rapport à chacun desdits électroaimants pour sélectivement appliquer ledit courant audit électroaimant.

28. Structure selon la revendication 25, dans laquelle le champ magnétique comprend le champ magnétique terrestre.

29. Structure selon la revendication 25, comprenant en outre au moins des moyens positionnés à l'extérieur de ladite enceinte pour générer ledit champ magnétique.

30. Structure selon la revendication 13, dans laquelle ledit capteur de force de gravité comprend un poids connecté de façon rotative à ladite enceinte, ledit poids ayant un centre de gravité tenu à distance dudit axe.

31. Structure selon la revendication 24, dans laquelle lesdits moyens d'application sélective comprennent un mécanisme répondant à l'orientation relative dudit champ magnétique et à la direction dudit champ d'énergie ambiant.

32. Structure selon la revendication 31, dans laquelle :
ledit champ d'énergie ambiant comprend des ondes lumineuses heurtant ladite enceinte ; et
ledit mécanisme comprend : au moins deux photocapteurs pour produire des courants de commande pour ledit électroaimant ;
chacun desdits capteurs ayant une surface photosensible, dans laquelle la surface photosensible de chacun desdits capteurs se trouve sur un plan différent du plan de la surface photosensible de tout autre capteur.

33. Structure selon la revendication 32, comprenant en outre au moins un collecteur photovoltaïque ayant une surface photosensible, et produisant ledit courant d'alimentation.

34. Structure selon la revendication 15, dans laquelle ledit dispositif électromécanique comprend au moins un électroaimant générant un champ magnétique polarisant ; et
qui comprend en outre au moins une bobine à côté desdits moyens pour détecter, et pour exciter ladite bobine et créer un champ magnétique correctif oppose audit champ magnétique polarisant.

35. Structure selon la revendication 22, dans laquelle lesdits moyens d'activation répétée dudit capteur comprennent des moyens montés sur ledit capteur de champ magnétique, pour générer une tension ayant une polarité répondant à l'orientation dudit capteur.

36. Structure selon la revendication 1, incluant une seconde caractéristique visuelle, dans laquelle lesdites première et seconde caractéristiques visuelles se déplacent de façon coopérative l'une par rapport à l'autre.

37. Structure selon la revendication 3, dans laquelle ledit conteneur et ledit corps ont des formes sensiblement toroïdales,

38. Structure selon la revendication 1, dans laquelle ledit conteneur est sensiblement en forme de cuvette et comprend :
une paroi externe
une paroi interne espacée de ladite paroi externe
une base intégrée dans une section inférieure de ladite paroi externe
une partie inférieure espacée de ladite base et intégrée dans une section inférieure de ladite paroi interne
un bord supérieur joignant les sections supérieures desdites parois.

39. Structure selon la revendication 37, dans laquelle au moins une section dudit conteneur est faite de matériaux et dimensions prédéterminés pour ne pas afficher ladite première caractéristique visible sur ladite zone de surface extérieure dudit conteneur.

40. Structure selon la revendication 4, dans laquelle ledit conteneur a sensiblement la forme d'une cuvette et comprend :
une paroi externe
une paroi interne espacée de ladite paroi externe
une base intégrée dans une section inférieure de ladite paroi externe
une partie inférieure espacée de ladite base et intégrée dans une section inférieure de ladite paroi interne
un bord supérieur joignant les sections supérieures desdites parois
dans laquelle ledit corps a sensiblement la forme d'une cuvette et est niché à l'intérieur dudit conteneur en forme de cuvette.
